# EUROPÄISCHE PATENTSCHRIFT

(11) **EP 0 630 028 B1**
(45) Veröffentlichungstag und Bekanntmachung des Hinweises auf die Patenterteilung: **02.01.1997**
(21) Anmeldenummer: 93810424.7
(22) Anmeldetag: 14.06.1993
(51) Int. Cl.: G21C 13/032

(54) **Thermische Schutzhülse für Kernreaktordruckbehälterrohrstutzen**
Thermal protection sleeve for nuclear reactor vessel nozzle
Douille de protection thermique pour une tubulure d'une cuve d'un réacteur nucléaire

(43) Veröffentlichungstag der Anmeldung: 21.12.1994
(73) Patentinhaber: SULZER THERMTEC AG, CH-8401 Winterthur (CH)
(72) Erfinder: Blumer, Urs, Dr., CH-8405 Winterthur (CH)
(74) Vertreter: Hammer, Bruno, Dr.

(56) Entgegenhaltungen:
- EP-A- 0 293 721
- FR-A- 2 634 271
- US-A- 4 834 935

## Beschreibung

Die Erfindung bezieht sich auf einen Reaktordruckbehälter eines Kernkraftwerkes, mit mindestens einem mit einer Speisewasserzufuhrleitung in Verbindung stehenden Rohrstutzen, in dem eine koaxiale, sich bei Temperaturänderungen dehnende Schutzhülse (thermal sleeve) angeordnet ist, die mit ihrem äusseren Ende am Rohrstutzen gleitend anliegt und mit ihrem inneren Ende mit einem im Behälter befindlichen Speisewasserverteilring verbunden ist.

Bei Reaktordruckbehältern dieser Art wird über die Speisewasserzufuhrleitung kaltes Speisewasser in den Verteilring geführt, aus dem es dann in heisses Reaktorwasser übertritt, das sich im übrigen Raum des Behälters befindet. Zwischen dem gleitend am Rohrstutzen anliegenden Ende der Schutzhülse und dem Rohrstutzen kann kaltes Speisewasser in einen Ringspalt übertreten, der sich zwischen der Schutzhülse und dem Rohrstutzen befindet und mit heissem Reaktorwasser gefüllt ist. Durch das Zusammentreffen von heissem Reaktorwasser und kaltem Speisewasser in diesem Ringspalt können Wärmespannungen im Rohrstutzen entstehen, die dann zu Rissen im Stutzenwerkstoff führen können. Mit Rücksicht auf die Bestimmungen über die Reaktorsicherheit sind solche Risse nicht tolerierbar.

Der Erfindung liegt die Aufgabe zugrunde, den Reaktordruckbehälter der eingangs genannten Art so zu verbessern, dass eine Rissbildung im Rohrstutzen sicher vermieden wird.

Diese Aufgabe wird erfindungsgemäss dadurch gelöst, dass zwischen dem äusseren Ende des Rohrstutzens und der Speisewasserzufuhrleitung ein Rohrabschnitt eingesetzt ist und dass in dem Rohrabschnitt ein Faltenbalg angeordnet ist, der mit seinem einen Ende mit dem äusseren Ende der sich dehnenden Schutzhülse und mit seinem anderen Ende mit dem Rohrabschnitt dicht verbunden ist.

Durch die Anordnung des Faltenbalges in dem Rohrabschnitt und die dichte Verbindung des Faltenbalges mit dem Rohrabschnitt und der sich dehnenden Schutzhülse wird erreicht, dass sich die Schutzhülse weiterhin im Rohrstutzen unter dem Einfluss von Temperaturänderungen frei dehnen kann, wobei der Faltenbalg diese Dehnbewegungen mitmacht, dass aber ein Uebertreten von kaltem Speisewasser in den mit heissem Reaktorwasser gefüllten Ringspalt vermieden wird. In dem Ringspalt können also keine periodischen Aenderungen der Wassertemperatur auftreten, so dass damit oberflächliche Temperaturänderungen im Rohrstutzen vermieden sind. Ein Entstehen von Rissen im Stutzenwerkstoff ist damit ausgeschlossen.

Ein Ausführungsbeispiel der Erfindung ist in der folgenden Beschreibung anhand der Zeichnung näher erläutert. Es zeigen:
- Fig.1: einen Vertikalschnitt durch einen Teil des Reaktordruckbehälters, des Rohrstutzens und der Speisewasserzufuhrleitung gemäss dem Stand der Technik und
- Fig.2: einen Vertikalschnitt durch einen Teil des Rohrstutzens und der Zufuhrleitung mit der erfindungsgemässen Anordnung.

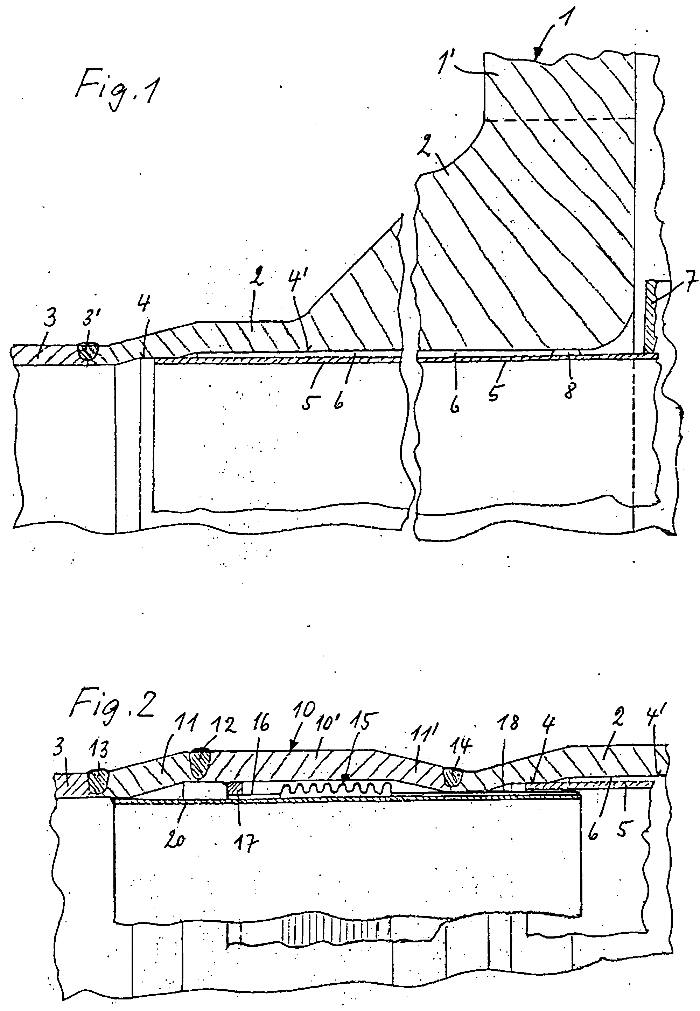

Gemäss Fig.1 ist ein zylindrischer Reaktordruckbehälter 1 einer Kernreaktoranlage mit einem Rohrstutzen 2 versehen, der in bekannter Weise in die Behälterwand 1' eingeschweisst ist. Das in Fig.1 linke Ende des Rohrstutzens 2 ist mit einer Speisewasserzufuhrleitung 3 z.B. durch eine Schweissnaht 3' verbunden, wobei die Innen- und Aussendurchmesser der Leitung 3 und des Endes des Rohrstutzens 2 im wesentlichen gleich gross sind. Ausserhalb des Bereiches dieser Verbindung ist der Rohrstutzen 2 auf seiner Innenseite etwas erweitert und geht dann in eine zylindrische Fläche 4 über, an der das äussere Ende einer Schutzhülse 5 gleitend anliegt, die sich durch den Rohrstutzen 2 in Richtung zum Behälterinnern erstreckt. Die Schutzhülse 5 unterliegt im Betrieb des Reaktordruckbehälters 1 Temperaturänderungen, weshalb für die Schutzhülse auch die Bezeichnung "thermal sleeve" verwendet wird. In Richtung auf das Behälterinnere schliesst sich an die zylindrische Fläche 4 im Rohrstutzen 2 nochmals eine Erweiterung an, die dann in eine zylindrische Fläche 4' übergeht, so dass zwischen der Schutzhülse 5 und dem Rohrstutzen 2 ein Ringspalt 6 freibleibt. Das in das Behälterinnere ragende Ende der Schutzhülse 5 geht in einen nicht näher dargestellten Speisewasserverteilring 7 über, der sich im Behälter 1 entlang dem Behälterumfang erstreckt. Nahe dem inneren Ende des Rohrstutzens 2 ist die Schutzhülse 5 aussen mit Nocken 8 versehen, die sich durch den Ringspalt 6 erstrecken und die Schutzhülse in der Stutzenbohrung zentrieren.

Im Betrieb des Reaktordruckbehälters 1 wird über die Speisewasserzufuhrleitung 3 und die Schutzhülse 5 kaltes Speisewasser zum Verteilring 7 geführt, aus dem das Speisewasser in das Behälterinnere übertritt. Das Behälterinnere ist im übrigen mit heissem Reaktorwasser gefüllt, das sich auch in dem Ringspalt 6 befindet. Da der enge Spalt zwischen dem äusseren Ende der Schutzhülse 5 und der zylindrischen Fläche 4 nicht dicht ist, gelangt auch kaltes Speisewasser in den Ringspalt 6. Durch das Zusammentreffen von kaltem und heissem Wasser im Ringspalt 6 können Wärmespannungen im Rohrstutzen 2 auftreten, die zu Rissen im Stutzenmaterial führen können.

Gemäss Fig.2 ist zwischen dem äusseren Ende des Rohrstutzens 2 und der Speisewasserzufuhrleitung 3 ein Rohrabschnitt 10 eingesetzt, der in seinem mittleren Teil 10' im Vergleich zu den Innen- und Aussendurchmessern der Leitung 3 und des Stutzenendes erweitert ist. Die beiden Enden dieses erweiterten Teils 10' gehen in je einen hohlkegeligen Teil 11 und 11' über, die mit der Leitung 3 bzw. dem Ende des Rohrstutzens 2 dicht verbunden sind, z.B. durch Schweissnähte 13 bzw. 14. Aus herstellungstechnischen Gründen ist auch zwischen dem hohlkegeligen Teil 11 und dem mittleren Teil 10'eine Schweissverbindungsnaht 12 vorgesehen. Im erweiterten Teil 10' ist ein Faltenbalg 15 angeordnet, der an seinem in Fig.2 linken Ende einen zylindrischen Rohrabschnitt 16 aufweist, dessen Durchmesser ungefähr dem Innendurchmesser der Balgfalten entspricht. Das in Fig.2 linke Ende des Rohrabschnitts 16 ist mit einem Ring 17 dicht verbunden, der in den mittleren Teil 10' eingeschweisst ist und den Abstand zwischen dem Rohrabschnitt 16 und den Innendurchmesser des mittleren Teils 10' überbrückt. Ein dem zylindrischen Rohrabschnitt 16 entsprechender Rohrabschnitt 18 ist am in Fig.2 rechten Ende des Faltenbalges 15 vorgesehen, der sich über den Rohrabschnitt 10 hinaus bis in die Schutzhülse 5 erstreckt. Der Rohrabschnitt 18 ist mit der Schutzhülse 5 auf deren Innenseite dicht verbunden, z.B. durch Schweissen.

Auf diese Weise wird es möglich, dass sich die Schutzhülse 5 - wie bisher - im Rohrstutzen 2 unter dem Einfluss von Temperaturänderungen dehnen kann und dass zugleich ein Uebertreten von kaltem Speisewasser in den Ringspalt 6 verhindert wird, weil der Faltenbalg 15 die Wärmedehnungen mitmacht, aber mit dem Rohrabschnitt 10 und der Schutzhülse 5 dicht verbunden ist.

Aus strömungstechnischen Gründen ist im Faltenbalg 15 ein Rohr 20 angeordnet, dessen Aussendurchmesser dem Innendurchmesser des hohlkegeligen Teils 11 im Bereich der Schweissnaht 13 entspricht. Das Rohr 20 ist mit dem hohlkegeligen Teil 11 an dessem verjüngten Ende dicht verbunden und erstreckt sich bis zum in der Schutzhülse 5 befindlichen Ende des zylindrischen Rohrabschnitts 18 des Faltenbalges 15. Das in Fig.2 rechte Ende des Rohres 20 liegt am Rohrabschnitt 18 an und ist mit diesem nicht fest verbunden. Damit kann sich das Rohr 20 frei dehnen, ist also ebenfalls ein thermal sleeve.

Abweichend von dem beschriebenen Ausführungsbeispiel in Fig.2 kann der Rohrabschnitt 10 gleiche Durchmesserabmessungen wie die Speisewasserleitung 3 und der Rohrstutzen 2 haben. In einem solchen Fall ragt der Faltenbalg 15 etwas in den Strömungsquerschnitt. Das gegebenenfalls vorhandene Rohr 20 könnte dann an seinem in Fig.2 linken Ende aufgeweitet sein.

## Patentansprüche

1. Reaktordruckbehälter eines Kernkraftwerkes, mit mindestens einem mit einer Speisewasserzufuhrleitung in Verbindung stehenden Rohrstutzen, in dem eine koaxiale, sich bei Temperaturänderungen dehnende Schutzhülse angeordnet ist, die mit ihrem äusseren Ende am Rohrstutzen gleitend anliegt und mit ihrem inneren Ende mit einem im Behälter befindlichen Speisewasserverteilring verbunden ist, dadurch gekennzeichnet, dass zwischen dem äusseren Ende des Rohrstutzens und der Speisewasserzufuhrleitung ein Rohrabschnitt eingesetzt ist und dass in dem Rohrabschnitt ein Faltenbalg angeordnet ist, der mit seinem einen Ende mit dem äusseren Ende der sich dehnenden Schutzhülse und mit seinem anderen Ende mit dem Rohrabschnitt dicht verbunden ist.

2. Behälter nach Anspruch 1, dadurch gekennzeichnet, dass im Faltenbalg ein Rohr angeordnet ist, das an seinem einen Ende ausserhalb des Faltenbalges mit dem Rohrabschnitt verbunden ist und dessen anderes Ende sich in das äussere Ende der sich dehnenden Schutzhülse erstreckt.

3. Behälter nach Anspruch 1 oder 2, dadurch gekennzeichnet, dass der Rohrabschnitt gegenüber dem Rohrstutzen aufgeweitet ist und an seinen beiden Enden mit hohlkegeligen Teilen versehen ist, deren verjüngte Enden auf die Abmessungen der Speisewasserzufuhrleitung bzw. des Endes des Rohrstutzens abgestimmt sind.

## Claims

1. A reactor pressure vessel of a nuclear power station, having at least one pipe socket connected to a feed-water supply line, in which a coaxial protective sleeve expanding with changes in temperature is disposed, which with its outer end slidably abuts the pipe socket and with its inner end is connected to a feed-water distributing ring situated in the vessel,
**characterised in that** a pipe section is inserted between the outer end of the pipe socket and the feed-water supply line,
**and in that** in the pipe section are disposed bellows, which with one end are tightly connected to the outer end of the expanding protective sleeve and with their other end are tightly connected to the pipe section.

2. A vessel according to Claim 1,
**characterised in that** in the bellows is disposed a pipe, which at one end outside the bellows is connected to the pipe section and the other end of which extends into the outer end of the expanding protective sleeve.

3. A vessel according to Claim 1 or 2,
**characterised in that** the pipe section is extended opposite the pipe socket and at both its ends is provided with hollow conical parts, the tapered ends of which are adapted to the dimensions of the feed-water supply line and the end of the pipe socket respectively.

## Revendications

1. Cuve de réacteur d'une centrale nucléaire, avec au moins une tubulure en liaison avec une conduite d'amenée d'alimentation, tubulure dans laquelle est disposée une douille de protection coaxiale, se dilatant lors de modifications de la température et qui s'applique de façon coulissante par son extrémité extérieure à la tubulure et qui est reliée par son extrémité intérieure à un anneau de distribution d'alimentation se trouvant dans la cuve, caractérisée en ce qu'il est placé entre l'extrémité extérieure de la tubulure et la conduite d'amenée d'alimentation un tronçon de tuyau et en ce qu'il est disposé dans le tronçon de tuyau un soufflet qui est relié de manière étanche par l'une de ses extrémités à l'extrémité extérieure du manchon de protection qui se dilate et par son autre extrémité au tronçon de tuyau.

2. Cuve selon la revendication 1, caractérisée en ce qu'il est disposé dans le soufflet un tuyau qui est relié à l'une de ses extrémités à l'extérieur du soufflet au tronçon de tuyau et dont l'autre extrémité s'étend dans l'extrémité extérieure du manchon de protection qui se dilate.

3. Cuve selon la revendication 1 ou 2, caractérisée en ce que le tronçon de tuyau est élargi par rapport à la tubulure et qu'il est pourvu à ses deux extrémités de parties de cône creuses dont les extrémités diminuées sont adaptées aux dimensions de la conduite d'amenée d'alimentation et, respectivement de l'extrémité de la tubulure.
